# EUROPÄISCHE PATENTSCHRIFT

(11) **EP 1 144 885 B1**
(45) Veröffentlichungstag und Bekanntmachung des Hinweises auf die Patenterteilung: **26.03.2003**
(21) Anmeldenummer: 99965495.7
(22) Anmeldetag: 18.12.1999
(51) Int. Cl.: F16H 61/00

(54) **HYDRAULIKSTEUERUNG FÜR EIN STUFENLOS VERÄNDERLICHES GETRIEBE**
HYDRAULIC CONTROL FOR A CONTINUOUSLY VARIABLE TRANSMISSION
SYSTEME DE COMMANDE HYDRAULIQUE POUR UNE TRANSMISSION A VARIATION CONTINUE

(30) Priorität: 22.12.1998 DE 19859245
(43) Veröffentlichungstag der Anmeldung: 17.10.2001
(73) Patentinhaber: ROBERT BOSCH GMBH, 70442 Stuttgart (DE); Van Doorne's Transmissie B.V., 5000 AM Tilburg (NL)
(72) Erfinder: LUH, Joachim, D-74321 Bietigheim-Bissingen (DE); VAN WIJK, Wilhelmus, Johannes, Maria, NL-5071 AN Udenhout (NL)
(86) Internationale Anmeldenummer: EP9910105
(87) Internationale Veröffentlichungsnummer: WO00037825

(56) Entgegenhaltungen:
- EP-A- 0 289 290
- EP-A- 0 435 559
- EP-A- 0 445 829
- DE-A- 19 519 162
- US-A- 3 600 960
- US-A- 5 088 352

## Beschreibung

### Stand der Technik

Die Erfindung betrifft eine Hydrauliksteuerung für ein stufenlos veränderliches Getriebe nach dem Oberbegriff des Anspruchs 1. Aus der DE 195 19 162 A1 ist eine solche Hydrauliksteuerung bekannt, die aus einem Leistungsteil und einem Steuerungsteil besteht. Bei dieser Hydrauliksteuerung ist nur eine Pumpe vorgesehen, die zum einen den Leistungsteil und zum andern den Steuerungsteil speist. Deshalb muß zur Erfüllung beider Aufgaben eine Hochdruckpumpe vorgesehen werden. Da somit, insbesondere an den Steuereingängen der Ventile des Steuerungsteiles höhere Drücke anstehen, führt dies zu hohen Leckagen. Außerdem hat dies auch einen erhöhten Kraftstoffverbrauch zur Folge.

### Vorteile der Erfindung

Die erfindungsgemäße Hydrauliksteuerung mit den kennzeichnenden Merkmalen des Anspruchs 1 hat demgegenüber den Vorteil, daß geringere Leckagen auftreten und daß der Kraftstoffverbrauch sinkt. Es ist besonders vorteilhaft, eine Hochdruck- und eine Niederdruckpumpe zu verwenden.

Außerdem ist es zweckmäßig, wenn der Drosselstelle ein zusätzliches Druckbegrenzungsventil nachgeschaltet ist.

Weitere Vorteile und vorteilhafte Weiterbildungen der erfindungsgemäßen Hydrauliksteuerung ergeben sich aus den Unteransprüchen und der Beschreibung.

### Zeichnung

Ausführungsbeispiele der Erfindung sind in der Zeichnung dargestellt und in der nachfolgenden Beschreibung näher erläutert. Es zeigen
- Figur 1: ein erstes Ausführungsbeispiel einer Hydrauliksteuerung,
- Figur 2: ein zweites Ausführungsbeispiel einer Hydrauliksteuerung und
- Figur 3: ein drittes Ausführungsbeispiel einer Hydrauliksteuerung.

### Beschreibung der Ausführungsbeispiele

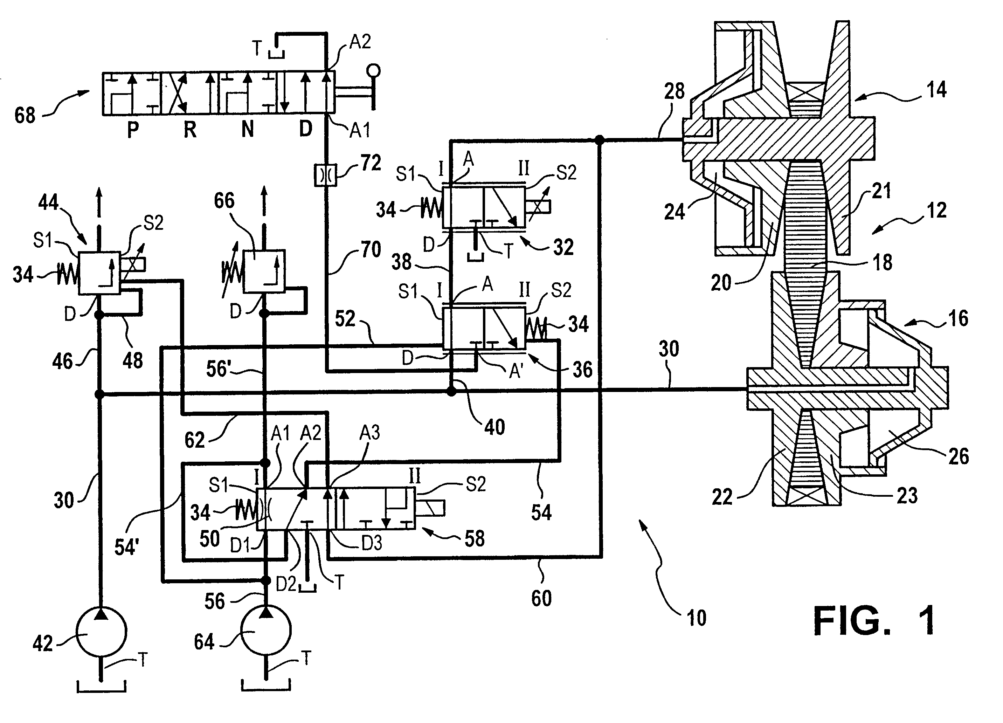

In der Figur 1 ist als erstes Ausführungsbeispiel der Ausschnitt einer Hydrauliksteuerung 10 für ein stufenlos veränderliches Getriebe 12 dargestellt. Die Hydrauliksteuerung 10 wird vorzugsweise bei einem Ausfall der elektrischen Versorgung einer elektrohydraulischen Steuerung des stufenlos veränderlichen Getriebes 10 eingesetzt. Es ist jedoch auch denkbar, die Hydrauliksteuerung 10 für den Normalbetrieb des Getriebes 12 zu verwenden.

Im vorliegenden Ausführungsbeispiel handelt es sich um ein sogenanntes Doppelkegelscheiben-Umschlingungsgetriebe, das auch als Variator oder CVT-Getriebe bezeichnet wird. Es ist jedoch auch denkbar, daß statt eines Doppelkegelscheiben-Umschlingungsgetriebes ein anderes stufenlos veränderliches Getriebe, wie beispielsweise ein Kegelreibrad-Umlaufgetriebe oder dergleichen verwendet wird. Das Getriebe 12 weist eine erste und eine zweite Verstellvorrichtung 14, 16 auf. Die erste Verstellvorrichtung ist auf einer antriebsseitigen Welle und die zweite Verstellvorrichtung 16 auf einer abtriebsseitigen Welle des Getriebes 12 angeordnet. Das Getriebe 12 umfaßt zwei Kegelscheibenpaare, zwischen denen ein Übertragungsmittel 18, beispielsweise ein Schubgliederband, eine Kette, ein Keilriemen oder dergleichen, angeordnet ist. Beide Kegelscheibenpaare bestehen jeweils aus zwei Kegelscheiben 20, 21, 22, 23, die hydraulisch gegeneinander verspannbar ausgebildet sind. Die dazu notwendigen Kolben- und Zylinderteile sind vorzugsweise zumindest in einem Teil der Kegelscheiben 20, 23 integriert. Die von diesen Teilen eingeschlossenen Kolbenräume, auf der Primärseite der mindestens eine Kolbenraum 24 und auf der Sekundärseite der Kolbenraum 26, werden entsprechend der eingestellten Übersetzung mit dem jeweiligen Arbeitsdruck beaufschlagt. Die wirksame Fläche des Kolbenraumes 24 der ersten Verstellvorrichtung 14 ist in der Regel größer als die wirksame Fläche des Kolbenraumes 26 der zweiten Verstellvorrichtung 16. Es gibt auch Getriebe, die in einer ersten Verstellvorrichtung zwei Kolbenräume aufweisen, wobei sich wiederum insgesamt eine größere wirksame Fläche ergibt.

Sind die primärseitigen Kegelscheiben 20, 21 dicht beisammen und die sekundärseitigen Kegelscheiben 22, 23 weit voneinander entfernt, so läuft das Übertragungsmittel primärseitig auf einem großen und sekundärseitig auf einem kleinen Radius. Dadurch ist das Übersetzungsverhältnis des Getriebes 12, d.h. das Verhältnis der Eingangs- zur Ausgangsdrehzahl groß, der größte Wert wird hier mit "Overdrive" bezeichnet. Sind die primärseitigen Kegelscheiben 20, 21 weit voneinander entfernt und die sekundärseitigen Kegelscheiben 22, 23 dicht beisammen, so läuft das Übertragungsmittel primärseitig auf einem kleinen und sekundärseitig auf einem großen Radius. Dadurch ist das Übersetzungsverhältnis des Getriebes 12, d.h. das Verhältnis der Eingangs- zur Ausgangsdrehzahl niedrig, der niedrigste Wert wird hier mit "Low" bezeichnet.

An dem Kolbenraum 24 der ersten Verstellvorrichtung 14 ist eine Versorgungsleitung 28 und am Kolbenraum 26 der zweiten Verstellvorrichtung 16 ist eine Versorgungsleitung 30 angeschlossen. Die Versorgungsleitung 28 für den Kolbenraum 24 der ersten Verstellvorrichtung 14 ist an einem Arbeitsanschluß A eines Ventils 32 für den Normalbetrieb angeschlossen. Bei dem Ventil 32 für den Normalbetrieb handelt es sich im vorliegenden Ausführungsbeispiel um ein Regelventil, wobei auch ein Proportionalventil oder Schaltventil denkbar ist. Das Ventil 32 hat zwei Regelstellungen I, II. An einem Steuereingang S1 ist eine Druckfeder 34 angeordnet und an einem zweiten Steuereingang S2 ist eine magnetische Betätigung vorgesehen, wobei auch eine elektrohydraulische Betätigung möglich ist. In der ersten Regelstellung I ist der Arbeitsanschluß A mit einem Druckanschluß D verbunden. Ein Tankanschluß T ist hierbei verschlossen. In der zweiten Regelstellung II ist der Arbeitsanschluß A mit dem Tankanschluß T verbunden und der Druckanschluß D ist verschlossen. Ist der zweite Steuereingang S2 nicht betätigt, so wird das Ventil 32 aufgrund der Federkraft der Druckfeder 34 in die Regelstellung I gebracht.

Das Ventil 32 für den Normalbetrieb ist einem Ventil 36, das zumindest für den Notbetrieb - gegebenenfalls auch für den Normalbetrieb - verwendet wird, nachgeschaltet. Es ist auch möglich, daß das Ventil 36 dem Ventil 32 nachgeschaltet ist. Im vorliegendem Ausführungsbeispiel ist hierfür der Druckanschluß D des Ventils 32 für den Normalbetrieb über eine Zwischenleitung 38 an einem Arbeitsanschluß A des Ventils 36 angeschlossen. Von einem Druckanschluß D des Ventils 36 führt eine Verbindungsleitung 40 zur Versorgungsleitung 30 für den Kolbenraum 26 der zweiten Verstellvorrichtung 16.

Die Versorgungsleitung 30 ist mit mindestens einer ersten Pumpe 42 zur Beaufschlagung der Kolbenräume 24, 26 verbunden. Bei der ersten Pumpe 42 handelt es sich um eine Hochdruckpumpe. Der von der ersten Pumpe 42 gelieferte Druckbereich liegt in einem Bereich von ca. 4 bis 80 bar. Dieser Druckbereich ist für die ausreichende Versorgung der Kolbenräume 24, 26 notwendig, so daß die Übersetzung des Getriebes 12 verändert werden kann und noch ein ausreichender Anpreßdruck der Kegelscheiben 20, 21, 22, 23 auf das Übertragungsmittel 18 vorhanden ist. Die erste Pumpe 42 ist somit über die Versorgungsleitungen 30, 28 - die Zwischenleitung 38 und die Verbindungsleitung 40 sind in diesem Sinne auch Versorgungsleitungen - mit den Kolbenräumen 24, 26 der ersten und zweiten Verstellvorrichtung 14, 16 zur Übersetzungsänderung des Getriebes 12 verbunden. Die Versorgungsleitung 30 versorgt insofern auch den Kolbenraum 24 mit Druckmittel.

Wenigstens die Versorgungsleitung 30 ist mit einem Druckanschluß D eines Druckbegrenzungsventiles 44 verbunden. Dies erfolgt im vorliegenden Ausführungsbeispiel über eine Leitung 46. Am ersten Steuereingang S1 des Druckbegrenzungsventils 44 ist eine Druckfeder 34 angeordnet. Am zweiten Steuereingang S2 ist eine elektrische oder hydraulische Betätigung sowie eine Rückführleitung 48, die mit der Leitung 46 oder direkt mit der Versorgungsleitung 30 in Verbindung steht, vorgesehen.

Das Ventil 36 dient im Notbetrieb zur Steuerung des Druckes in dem Kolbenraum 24 der ersten Verstellvorrichtung 14 und ist seinerseits in bekannter Weise mit einem an einer Drosselstelle 50 erzeugten Druckgefälle steuerbar. Über die wenigstens eine Zwischenleitung 38, die an den Arbeitsanschluß A des Ventils 38 angeschlossen ist, ist das Ventil 36 mit dem Kolbenraum 24 der ersten Verstellvorrichtung 14 verbunden. In einer ersten Regelstellung I ist hierzu der Druckanschluß D mit dem Arbeitsanschluß A und somit der Kolbenraum 24 mit der Pumpe 42 verbunden. Das Ventil 36 weist auf der Seite des Druckanschlusses D noch einen Abflußanschluß A' auf, der in der ersten Regelstellung I des Ventils 36 verschlossen ist. Ein erster Steuereingang S1 des Ventils 36 wird von einer ersten Steuerleitung 52 und ein zweiter, gegenüberliegender Steuereingang S2 wird von einer zweiten Steuerleitung 54 beaufschlagt. Zusätzlich ist an diesem zweiten Steuereingang S2 eine Druckfeder 34 vorgesehen. Die erste Steuerleitung 52 steht mit einer Hydraulikleitung 56 in Verbindung, die in Förderrichtung vor der Drosselstelle 50 angeordnet ist. Die Drosselstelle 50 ist vorzugsweise in einem Umschaltventil 58 angeordnet. Insofern ist die erste Steuerleitung 52 in Förderrichtung auch vor dem Umschaltventil 58 angeschlossen. Das Umschaltventil 58 weist zwei Schaltstellungen I und II auf. Am ersten Steuereingang des Umschaltventils 58 ist eine Feder 34 und am zweiten Steuereingang S2 eine elektrische oder hydraulische Betätigung vorgesehen. Das Umschaltventil 58 weist mindestens einen ersten Druckanschluß D1 und einen ersten Arbeitsanschluß A1 auf, die in der ersten Schaltstellung I über die Drosselstelle 50 und in der zweiten Schaltstellung II über eine wenigstens im wesentlichen druckabfallfreie Verbindung miteinander verbunden sind.

Die in Förderrichtung der Drosselstelle 50 bzw. dem Umschaltventil 58 nachgeschaltete Hydraulikleitung 56' ist in vorteilhafter Weise über eine Steuerleitung 54' mit einem zweiten Druckanschluß D2 des Umschaltventils 58 verbunden. Der zweite Druckanschluß D2 steht in der ersten Schaltstellung I des Umschaltventils 58 mit einem zweiten Arbeitsanschluß A2 des Umschaltventils 58 in Verbindung. Der zweite Arbeitsanschluß A2 ist über die zweite Steuerleitung 54 mit dem zweiten Steuereingang S2 des Ventils 36 verbunden. Der zweite Druckanschluß D2 ist in der zweiten Schaltstellung II des Umschaltventils 58 verschlossen. Weiterhin weist das Umschaltventil 58 einen Tankanschluß T auf, der in der ersten Schaltstellung I verschlossen ist und in der zweiten Schaltstellung II des Umschaltventils mit dem zweiten Arbeitsanschluß A2 in Verbindung steht.

Für den Notbetrieb ist es wichtig, daß die erste Steuerleitung 52 vorgesehen ist, die in Förderrichtung vor dem Umschaltventil 58 angeschlossen ist und mit dem ersten Steuereingang S1 des Ventils 36 verbunden ist, und daß in Förderrichtung nach dem Umschaltventil 58 die zweite Steuerleitung 54, 54' angeordnet ist, die mit dem zweiten Steuereingang S2 des Ventils 36 verbunden ist. Vorteilhaft ist es hierbei, daß die zweite Steuerleitung 54' bzw. die Hydraulikleitung 56' die beide in Förderrichtung dem Umschaltventil 58 bzw. der Drosselstelle 50 nachgeschaltet sind, mit dem zweiten Druckanschluß D2 des Umschaltventils 58 verbunden sind.

Es ist eine Abzweigleitung 60 vorgesehen, die mit der ersten Versorgungsleitung 28 verbunden ist und somit mit dem Kolbenraum 24 der ersten Verstellvorrichtung 14 in Verbindung steht. Die Abzweigleitung 60 ist an einem dritten Druckanschluß D3 des Umschaltventils 58 angeschlossen. Der dritte Druckanschluß D3 steht in der ersten Schaltstellung I mit einem dritten Arbeitsanschluß A3 in Verbindung und ist in der zweiten Schaltstellung II verschlossen. Der dritte Arbeitsanschluß A3 ist über eine Leitung 62 mit dem zweiten Steuereingang S2 des Druckbegrenzungsventils 44 und in der zweiten Schaltstellung S2 des Umschaltventils 58 mit dem Tankanschluß T des Umschaltventils 58 verbunden. Auf diese Weise läßt sich der Druck des Kolbenraums 24 der ersten Verstellvorrichtung 14 auf den zweiten Steuereingang S2 des Druckbegrenzungsventils 44 leiten. Somit läßt sich der Druck im Kolbenraum 26 und indirekt im Kolbenraum 24 regeln, wodurch sich insbesondere hohe, das Übertragungsmittel 18 schädigende Drücke, vermeiden lassen.

Die Drosselstelle 50 bzw. das Umschaltventil 58 sind einer mindestens zweiten Pumpe 64 nachgeschaltet, die einen niedrigeren Druckbereich erzeugt, als die erste Pumpe 42. Bei der zweiten Pumpe handelt es sich um eine sogenannte Niederdruckpumpe, die einen Druckbereich von ca. 2 bis 7 bar erzeugen kann. Die erste Pumpe 42 dient somit der Versorgung der Kolbenräume 24, 26, wo hohe Drücke benötigt werden, und die zweite Pumpe 64 der Versorgung der Ventile 34, 58 mit denen die Drücke mit den Kolbenräumen 24, 26 gesteuert werden. Zwar ist es auch möglich, die Hydraulikleitung 56 und somit die Ventile 34, 58 mit dem hohen Druckniveau der Pumpe 42 zu beaufschlagen. Durch die Verwendung der zweiten Pumpe 64, die eine bereits vorhandene Pumpe sein kann, treten jedoch viel geringere Leckagen auf. Dadurch können auch die Ventile 36, 58 günstiger dimensioniert werden. Außerdem hat dies zur Folge, daß der Kraftstoffverbrauch sinkt.

Der Drosselstelle 50 bzw. dem Umschaltventil 58 ist über die Hydraulikleitung 56' ein zusätzliches Druckbegrenzungsventil 66 nachgeschaltet. Dadurch läßt sich in vorteilhafter Weise auch das Druckniveau an den Steuereingängen des Ventils 36 regulieren.

Für die Betriebszustände Parken P, Rückwärtsfahrt R, Neutral N und Vorwärtsfahrt D ist eine als Schaltventil 68 ausgebildete Vorrichtung vorgesehen, wobei es sich im vorliegenden Ausführungsbeispiel um ein Handschaltventil handelt. Es ist durchaus üblich und an und für sich bekannt, ein Ventil für die genannten Betriebszustände zu verwenden. Es ist jedoch auch denkbar, statt einer derartigen Vorrichtung eine andere Vorrichtung oder mehrere Vorrichtungen für die Betriebszustände Parken P, Rückwärtsfahrt R, Neutral N und Vorwärtsfahrt D vorzusehen. Beispielsweise kann für jeden Betriebszustand ein separates Ventil vorgesehen werden oder es können beispielsweise auch elektromotorische Steller eingesetzt werden, die die Aufgaben des Schaltventils 68 übernehmen. Die Verwendung des Schaltventils 68 ist jedoch sehr günstig, da dadurch nur eine Vorrichtung für die Betriebszustände Parken P, Rückwärtsfahrt R, Neutral N und Vorwärtsfahrt D erforderlich ist. Das Schaltventil 68 hat mindestens vier Schaltstellungen P, R, N, D für den jeweiligen Betriebszustand Parken P, Rückwärtsfahrt R, Neutral N und Vorwärtsfahrt D. Es kommt vor, daß an einem Fahrzeug mit einem eingangs beschriebenen Getriebe 12 noch weitere Übersetzungen aufweist, die beispielsweise durch ins Langsame übersetzende Zahnradpaare realisiert werden.

Dadurch können sich Vorteile zum Beispiel bei steilen Anstiegen oder Lasten ergeben. Dadurch kann es sein, daß für den Betriebszustand Vorwärtsfahrt mehrere Vorwärtsgänge vorhanden sind. Diese sind hier unter dem Begriff Vorwärtsfahrt D zusammengefaßt. Falls das Schaltventil 68 auch zusätzliche Vorwärtsgänge schaltet, so können diese zum Beispiel durch zusätzliche Schaltstellungen D1, D2 usw., 1, 2, usw. 1, 3, oder 2, 4 usw. realisiert werden.

Das Schaltventil 68 weist mindestens einen ersten Anschluß A1 und einen gegenüberliegenden zweiten Anschluß A2 auf. Der zweite Anschluß A2 führt zu einem niedrigen Druckniveau z.B. Tank T oder kann auch direkt als Tankanschluß T ausgeführt sein. In den Schaltstellungen R und D sind der erste und der zweite Anschluß A1, A2 miteinander verbunden und in den Schaltstellungen P und N verschlossen, was alternativ auch in der Schaltstellung R möglich ist. Es ist auch denkbar, daß der erste und der zweite Anschluß A1, A2 in der Schaltstellung P miteinander verbunden sind. Durch die Anschlüsse A1, A2 lassen sich auf einfache Weise mehrere zusätzliche Aufgaben erfüllen.

In der zweiten Regelstellung II des Ventils 36 ist die Zwischenleitung 38 am Arbeitsanschluß A des Ventils 36 mit dem Abflußanschluß A' des Ventils 36 verbunden. Der Abflußanschluß A' ist über eine Leitung 70, in der vorzugsweise eine Drossel 72 angeordnet ist, mit dem ersten Anschluß A1 des Schaltventils 68 verbunden.

Im Normalbetrieb, d.h. wenn eine elektrische Versorgung für eine elektrohydraulische Steuerung des stufenlosen Getriebes 12 vorhanden ist, befindet sich das Umschaltventil 58 aufgrund der elektrischen oder hydraulischen Betätigung am zweiten Steuereingang S2 in der Schaltstellung II. Hierbei sind die Arbeitsanschlüsse A2, A3 mit dem Tankanschluß T in Verbindung. Dadurch werden die zweite Steuerleitung 54 und die Leitung 62 entleert. Nun kann der Begrenzungsdruck des Druckbegrenzungsventils 44 über die elektrische oder hydraulische Betätigung am zweiten Steuereingang S2 verändert werden. Somit wird über das Druckbegrenzungsventil 44 der Druck in der Versorgungsleitung 30 und somit dem Kolbenraum 26 der zweiten Verstellvorrichtung 16 eingestellt. Der Druck wird hierbei so variiert, daß ein ausreichender Anpreßdruck für das Übertragungsmittel 18 vorhanden ist. Der Druck ist jedoch so niedrig wie möglich, so daß das Übertragungsmittel 18 keinem unnötigen Verschleiß ausgesetzt wird.

Da auch die zweite Steuerleitung 54 mit dem Tankanschluß T des Umschaltventils 58 verbunden ist, wird das Ventil 36 aufgrund des Druckes in der Hydraulikleitung 56 und der ersten Steuerleitung 52, die den ersten Steuereingang S1 des Ventils 36 beaufschlagt, in die erste Regelstellung I gebracht. Der an der Steuerleitung S1 herrschende Druck wird durch das zusätzliche Druckbegrenzungsventil 66 eingestellt. Da es sich bei der zweiten Pumpe 64 um eine Niederdruckpumpe handelt, treten am Ventil 36 nur sehr geringe Leckagen auf. Dadurch lassen sich in vorteilhafter Weise einfachere und kostengünstigere Bauteile für die Hydrauliksteuerung 10 verwenden.

Mit dem Ventil 32 für den Normalbetrieb wird der Ölzulauf und Ölablauf im Kolbenraum 24 der ersten Verstellvorrichtung 14 eingestellt, wodurch die Übersetzung des Getriebes 12 veränderbar ist. Die entsprechende Regelstellung I, II wird durch die elektrische oder hydraulische Betätigung am zweiten Steuereingang S2 sowie der Federkraft der Feder 34 am ersten Steuereingang S1 eingestellt.

Im Notbetrieb, d.h. beim Ausfall der elektrischen Versorgung der elektrohydraulischen Steuerung des stufenlosen Getriebes 12, wird das Umschaltventil 58 aufgrund der Federkraft der Feder 34 am ersten Steuereingang S1 in die Schaltstellung I gebracht. Dadurch liegt über die Versorgungsleitung 28, die Abzweigleitung 60, den dritten Druckanschluß D3, den dritten Arbeitsanschluß A3 des Umschaltventils 58 und die Leitung 62 der Druck im Kolbenraum 24 der ersten Verstellvorrichtung 14 am zweiten Steuereingang S2 des Druckbegrenzungsventils 44 an. Dadurch ergibt sich eine übersetzungsabhängige Einstellung bzw. Veränderung des Drucks im Kolbenraum 26 der zweiten Verstellvorrichtung 16, der über die Versorgungsleitung 30 und die Leitung 46 am Druckanschluß D des Druckbegrenzungsventils 44 ansteht.

Das Ventil 32 für den Normalbetrieb wird im Notbetrieb über die Federkraft der Feder 34 am zweiten Steuereingang S1 in die Regelstellung I gebracht. Die Einstellung des Drucks im Kolbenraum 24 der ersten Verstellvorrichtung 14 erfolgt nun über das Ventil 36. Die Regelstellungen I, II des Ventils 36 werden hierbei über die am ersten Steuereingang S1 und am zweiten Steuereingang S2 anstehenden Drücke eingestellt. Die Drücke werden hierbei durch das an der Drosselstelle 50 anstehende Druckgefälle bestimmt. Dieses Druckgefälle wiederum hängt vom Ölvolumenstrom ab, der durch die Hydraulikleitung 56, 56' fließt. Der Ölvolumenstrom wird durch die Förderleistung der zweiten Pumpe 64 bestimmt, welche wiederum abhängig von der Drehzahl der Pumpe ist. Da die Pumpe 64 vom Motor, insbesondere einem Verbrennungsmotor, angetrieben wird, ist das Druckgefälle an der Drosselstelle 50 abhängig von der Drehzahl des Motors. Bei einer hohen Drehzahl des Motors wird das Ventil 36 aufgrund des gegenüber dem Öldruck in der zweiten Steuerleitung 54 höheren Öldrucks, der auch die Feder 34 überdrückt, in der ersten Steuerleitung 52 in die Regelstellung I gebracht. Dadurch herrschen in den Kolbenräumen 24, 26 die gleichen Drücke. Da der Kolbenraum 24 der ersten Verstellvorrichtung 14 eine größere wirksame Fläche hat als der Kolbenraum 26 der zweiten Verstellvorrichtung 16, nimmt das Getriebe 12 ein Übersetzungsverhältnis an, das Richtung "Overdrive" geht, wodurch gegebenenfalls die Drehzahl des Motors wiederum verringert wird.

Bei niedrigen Drehzahlen des Motors geht das Ventil 36 in die Regelstellung II, wodurch Öl aus dem Kolbenraum 24 der ersten Verstellvorrichtung 14 abfließen kann. Das Öl fließt hierbei vom Abflußanschluß A' des Ventils 36 über die Leitung 70 an den ersten Arbeitsanschluß A1 des Schaltventils 68. In den Schaltstellungen R und D, die den Betriebszuständen Rückwärtsfahrt R und Vorwärtsfahrt D entsprechen, kann das Öl über den zweiten Anschluß A2 zum Tank T fließen. Das Öl muß nicht unbedingt zum Tank T abfließen. Es reicht aus, wenn es auf einen gegenüber dem Kolbenraum 24 niedrigeren Druck bzw. ein niedrigeres Druckniveau geleitet wird, so daß es abfließen kann. Bei einer bereits geschilderten, alternativen Ausbildung des Schaltventils 68 findet dies nur in der Schaltstellung D statt. Durch die entsprechende Wahl der Größe der Drossel 72 kann auf einfache Weise die Geschwindigkeit beeinflußt werden, mit der das Getriebe 12 ein Übersetzungsverhältnis, das Richtung "Low" geht, annimmt. Diese Geschwindigkeit wird auf für den Fahrer komfortable Werte eingestellt.

Ist das Schaltventil 68 in der Schaltstellung P oder N, so ist der Anschluß A1 verschlossen. Ist hierbei das Ventil 36 in der zweiten Regelstellung II, so ist die Zwischenleitung 38 blockiert. Somit kann über die Zwischenleitung 38 und die Versorgungsleitung 28 kein Öl aus dem Kolbenraum 24 der ersten Verstellvorrichtung 14 entweichen. Dadurch kann das Übersetzungsverhältnis des Getriebes 12 nicht Richtung "Low" verstellt werden. Wird zum Beispiel bei einer schnellen Fahrt von der Schaltstellung D in die Schaltstellung N geschaltet, so wird ausgekuppelt. Sinkt dabei auch die Motordrehzahl beispielsweise auf Leerlaufdrehzahl ab, so sinkt das Druckgefälle an der Drosselstelle 15 ab, wodurch das Ventil 36 in die Regelstellung II gebracht wird. Wäre an dem Abflußanschluß A' beispielsweise ein Tank angeordnet, so könnte Öl aus dem Kolbenraum 24 der ersten Verstellvorrichtung 14 abfließen. Dadurch würde das Übersetzungsverhältnis des Getriebes 12 Richtung "Low" gehen. Würde dann wieder in die Schaltstellung D geschaltet und eingekuppelt, so würde der Motor schlagartig sehr hoch drehen müssen, was sich beispielsweise durch ein Aufheulen des Motors äußern würde. Durch das Blockieren der Zwischenleitung 38 in den Betriebszuständen P oder N bzw. den entsprechenden Schaltstellungen des Schaltventils 68 und in der zweiten Regelstellung II des Ventils 36 wird dies in vorteilhafter Weise vermieden.

Statt die Zwischenleitung 38 und somit den Kolbenraum 24 über das Schaltventil 68 zu blockieren, sind auch andere Maßnahmen möglich. Beim Schalten in den Betriebszustand N wird auch die Kupplung des Fahrzeugs ausgekuppelt. Durch das Nutzen eines Signals, das den ausgekuppelten Zustand darstellt, kann die Zwischenleitung 38 oder aber die Versorgungsleitung 28, die in diesem Fall ebenfalls als Zwischenleitung fungiert, durch ein zusätzliches Schaltventil, das in einer Schaltstellung durchschaltet und in einer anderen Schaltstellung sperrt, die Zwischenleitung 38 bzw. 28 blockiert werden. Dies kann beispielsweise dadurch erfolgen, daß der Ansteuerdruck an und für sich bekannter hydraulischer Kupplungen ausgenutzt wird, um dieses zusätzliche Ventil zu schalten. Es ist auch denkbar, daß eine Verstellung des Übersetzungsverhältnisses des Getriebes 12 in Richtung "Low" im Notbetrieb nur in der Schaltstellung D des Schaltventils 68 bzw. nur im Betriebszustand D möglich ist. Sind Mittel vorgesehen, durch die gewährleistet ist, daß nur in die Schaltstellung D geschaltet werden kann, wenn das Fahrzeug steht, so kann diese Verstellung des Getriebes 12 auch in dieser Schaltstellung bzw. bei diesem Betriebszustand ermöglicht werden. Dadurch ist auch das Anfahren in einer für das Fahrzeug unter Umständen günstigeren Übersetzung möglich.

Es versteht sich von selbst, daß das Ventil 32 für den Normalbetrieb auch ganz entfallen kann und die Steuerung des Getriebes 12 auch im Normalbetrieb lediglich über das Ventil 36 vorgenommen wird.

Wesentlich beim ersten Ausführungsbeispiel ist ferner, daß zusätzliche Mittel vorgesehen sind, die eine Verstellung des Getriebes 12 in Richtung "Low" nur im Betriebszustand Vorwärtsfahrt D ermöglichen. Eine solche Verstellung im Betriebszustand Rückwärtsfahrt R ist jedoch auch möglich. Ist eine Einrichtung vorgesehen, die den Betriebszustand Parken P bzw. die Schaltstellung P des Schaltventils 68 nur bei Stillstand des Fahrzeugs ermöglicht, so kann die Verstellung auch hier erfolgen. Die zusätzlichen Mittel sind im wesentlichen die Verbindung des Arbeitsanschlusses A mit dem Abflußanschluß A' des Ventils 36 in der Regelstellung II und die Leitung 70, die bei den entsprechenden Betriebszuständen Vorwärtsfahrt D sowie gegebenenfalls Rückwärtsfahrt R und eventuell Parken P mit einem niedrigeren Druck bzw. Druckniveau oder Tank T verbunden sind. Eine Verstellung des Übersetzungsverhältnisses des Getriebes 12 Richtung "Low" ist insbesondere im Betriebszustand Neutral N zu verhindern.

Für eine detailliertere Beschreibung der Funktion der Hydrauliksteuerung 10 im Notbetrieb bezüglich der Veränderung der Übersetzung des Getriebes 12, insbesondere was das Verhalten des Ventils 36 in Abhängigkeit vom Druckgefälle an der Drosselstelle 50 sowie dem Druckbegrenzungsventil 40 betrifft, wird im übrigen ausdrücklich auf die Offenbarung der DE 195 19 162 A1 verwiesen.

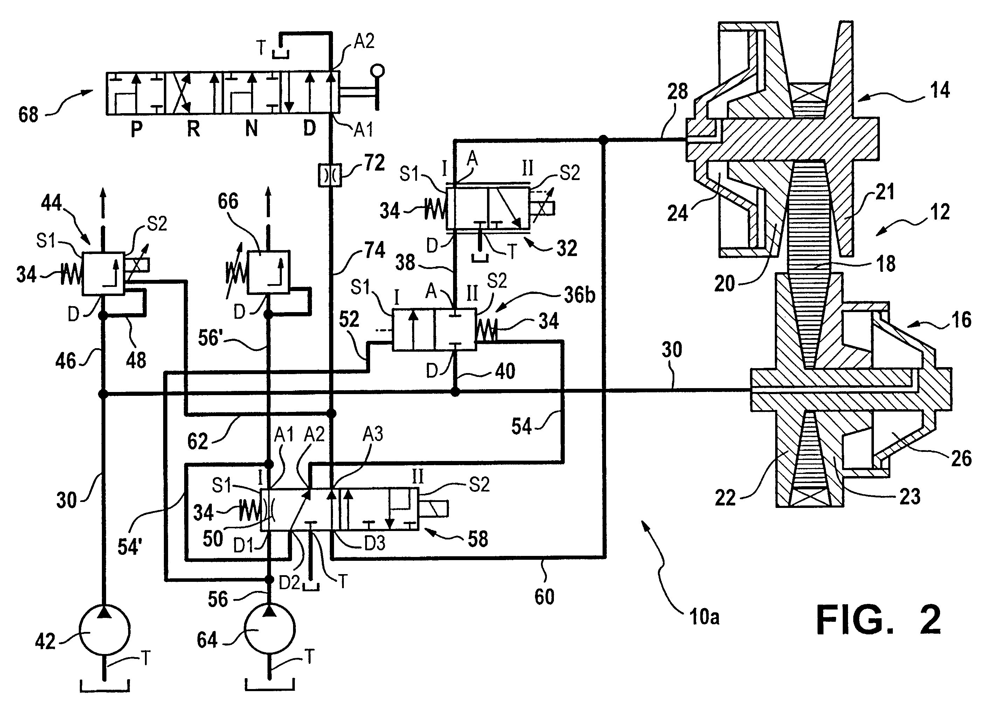

In der Figur 2 ist ein zweites Ausführungsbeispiel einer Hydrauliksteuerung 10a dargestellt. Die Hydrauliksteuerung 10a unterscheidet sich nur geringfügig von der Hydrauliksteuerung 10. So sind die Pumpen 42, 64, die Druckbegrenzungsventile 46, 66, das Umschaltventil 58, das Schaltventil 68, das Ventil 32 für den Normalbetrieb sowie das Getriebe 12 so wie bei der Figur 1 bereits beschrieben. Bei der Figur 2 entfällt die Leitung 70. Ansonsten sind alle Leitungen gleich, sowohl bei der Figur 1 als auch bei der Figur 2.

Anstelle des Ventils 36 ist ein Ventil 36b vorgesehen. Das Ventil 36b weist einen ersten Steuereingang S1 und einen zweiten Steuereingang S2 auf, die ebenfalls von der ersten Steuerleitung 52 bzw. der zweiten Steuerleitung 54 beaufschlagt werden. Am zweiten Steuereingang S2 ist ebenfalls eine Feder 34 vorgesehen. In der ersten Regelstellung I ist der Druckanschluß D mit dem Arbeitsanschluß A verbunden. In der zweiten Regelstellung II sind sowohl der Druckanschluß D als auch der Arbeitsanschluß A verschlossen.

Eine Leitung 74 ist am Anschluß A1 des Schaltventils 68 angeschlossen. In der Leitung 74 ist ebenfalls eine Drossel 72 angeordnet. Die Leitung 74 ist an der Leitung 62, die zum zweiten Steuereingang S2 des Druckbegrenzungsventils 44 führt, angeschlossen. In der ersten Schaltstellung I des Umschaltventils 58 ist die Leitung 74 somit mit der Abzweigleitung 60 verbunden. Wesentlich hierbei ist, daß an der Zwischenleitung 38 oder an der Versorgungsleitung 28 die Abzweigleitung 60 angeschlossen ist, die mit dem ersten Anschluß A1 des Schaltventils 68 verbunden ist, wobei die Verbindung im vorliegenden Ausführungsbeispiel über die Leitungen 62, 74 erfolgt. Vor dem Anschluß A1 des Schaltventils 68 ist vorzugsweise eine Drossel 72 vorgesehen. Der erste Anschluß A1 des Schaltventils ist in den Schaltstellungen P und N verschlossen, wobei es insbesondere auf ein Verschließen in der Schaltstellung N ankommt, und ist in den Schaltstellungen R und/oder D über einen zweiten Anschluß A2 mit einem niedrigen Druckniveau z.B. Tank T verbunden.

Ist im Notbetrieb das Ventil 36b in der Regelstellung I, so nimmt das Getriebe, wie auch bei der Figur 1 beschrieben, eine größere Übersetzung an bzw. der Motor eine niedrigere Drehzahl. In der Regelstellung II des Ventils 36b ist der Arbeitsanschluß A verschlossen, wodurch die Zwischenleitung 38 bzw. die Versorgungsleitung 28 blockiert ist. In den Schaltstellungen R und D des Schaltventils 68 kann dabei Öl über die Versorgungsleitung 28, die Abzweigleitung 60, die Leitungen 62, 74 und dem Schaltventil 68 zum Tank T abfließen. Durch das Ventil 36b kann das Getriebe 12 im Notbetrieb bei den Schaltstellungen P und N höchstens eine größere Übersetzung annehmen. Das Ventil 36b hat den Vorteil, daß es sehr einfach ausgeführt ist. Die Abläufe sind ansonsten so wie bei der Figur 1 bereits beschrieben.

Wesentlich beim zweiten Ausführungsbeispiel ist ferner, daß zusätzliche Mittel vorgesehen sind, die eine Verstellung des Getriebes 12 in Richtung "Low" nur im Betriebszustand Vorwärtsfahrt D ermöglichen. Eine solche Verstellung im Betriebszustand Rückwärtsfahrt R ist jedoch auch möglich. Ist eine Einrichtung vorgesehen, die den Betriebszustand Parken P bzw. die Schaltstellung P des Schaltventils 68 nur bei Stillstand des Fahrzeugs ermöglicht, so kann die Verstellung auch hier erfolgen. Die zusätzlichen Mittel sind im wesentlichen die Leitungen 60 und 74, die bei den entsprechenden Betriebszuständen Vorwärtsfahrt D sowie gegebenenfalls Rückwärtsfahrt R und eventuell Parken P mit einem niedrigeren Druck bzw. Druckniveau oder Tank T verbunden sind. Eine Verstellung des Übersetzungsverhältnisses des Getriebes 12 Richtung "Low" ist insbesondere im Betriebszustand Neutral N zu verhindern.

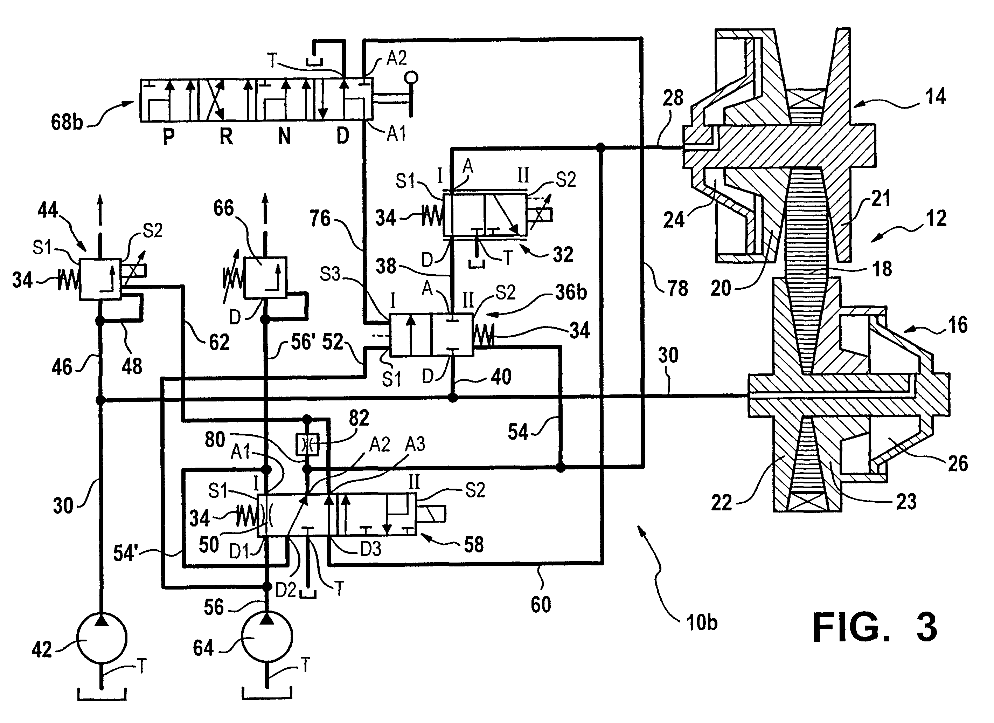

In der Figur 3 ist ein drittes Ausführungsbeispiel einer Hydrauliksteuerung 10b dargestellt. Die Pumpen 42, 64, die Druckbegrenzungsventile 44, 66, das Umschaltventil 58, das Ventil 32 für den Normalbetrieb sowie das Getriebe 12 sind genauso aufgebaut und miteinander verbunden, wie beim ersten Ausführungsbeispiel und bei der Figur 1 bereits beschrieben. Die Leitung 70 aus der Figur 1 entfällt.

Anstelle des Ventils 36 aus der Figur 1 wird ein Ventil 36b eingesetzt. Das Ventil 36b hat zwei Regelstellungen I, II. In der ersten Regelstellung I ist ein Druckanschluß D mit einem Arbeitsanschluß A verbunden. In der zweiten Regelstellung II sind sowohl der Druckanschluß D als auch der Arbeitsanschluß A verschlossen. Das Ventil 36b weist einen ersten Steuereingang S1 auf, der mit der ersten Steuerleitung 52 verbunden ist. An einem zweiten Steuereingang S2, der dem ersten Steuereingang S1 gegenüberliegt und diesem bei einer Druckbeaufschlagung entgegenwirkt, ist eine Feder 34 und die zweite Steuerleitung 54 angeschlossen. Das Ventil 36b weist noch einen dritten Steuereingang S3 auf, an dem eine dritte Steuerleitung 76 angeschlossen ist. Ein am dritten Steuereingang S3 anstehender Druck wirkt so wie ein am ersten Steuereingang S1 anstehender Druck. Beide Drücke wirken einem am zweiten Steuereingang S2 entstehenden Druck und der Federkraft der Feder 34 entgegen.

Die dritte Steuerleitung 76 ist am ersten Anschluß A1 des Schaltventils 68b angeschlossen. In den Schaltstellungen P, R, N ist der erste Anschluß A1 mit dem zweiten Anschluß A2 verbunden. In der Schaltstellung D ist der erste Anschluß A1 mit einem Tankanschluß T verbunden, der zweite Anschluß A2 ist hierbei verschlossen, was auch in der Schaltstellung R vorgesehen sein kann. Sind Mittel vorgesehen, die den Betriebszustand P bzw. die Schaltstellung P des Schaltventils 68 nur bei Stillstand des Fahrzeugs ermögliche, so kann dies auch im Betriebszustand P bzw. in der Schaltstellung P des Schaltventils 68 vorgesehen sein.

Am zweiten Anschluß A2 des Schaltventils 68b ist eine Leitung 78 angeschlossen, die mit der zweiten Steuerleitung 54 verbunden ist. Zwischen der zweiten Steuerleitung 54 und der Leitung 62 ist eine Verbindungsleitung 80 vorgesehen. In der Verbindungsleitung 80 ist vorzugsweise eine Drossel 82 vorgesehen.

Beim dritten Ausführungsbeispiel ist somit vorgesehen, daß an der Zwischenleitung 38 oder der Versorgungsleitung 28 die Abzweigleitung 60 angeschlossen ist, die mit der Hydraulikleitung 56' bzw. der zweiten Steuerleitung 54, 54' verbunden ist. Die Leitungen 60, 54, 54' sind der Drosselstelle 50 in Förderrichtung nachgeschaltet. In der Verbindungsleitung 80 ist eine Drossel 82 angeordnet. Weiterhin zweigt zwischen der Drossel 82 und der Drosselstelle 50 eine Leitung - in diesem Fall die zweite Steuerleitung 54 - ab, die an den zweiten Steuereingang S2 des Ventils 36b führt.

Weiterhin ist vorgesehen, daß zwischen der Drossel 82 und der Drosselstelle 50 eine Leitung - im vorliegenden Ausführungsbeispiel die Leitung 78, die von der zweiten Steuerleitung 54 abzweigt - angeschlossen ist, die an den zweiten Anschluß A2 des Schaltventils 68b führt, der in den Schaltstellungen P und N sowie gegebenenfalls R mit dem ersten Anschluß A1 verbunden ist, an dem die Steuerleitung 76 angeschlossen ist, die mit dem dritten Steuereingang S3 des Ventils 36 verbunden ist. Die dritte Steuerleitung 76 ist mit einem dritten Steuereingang S3 des Ventils 36b verbunden. Der erste Anschluß A1 ist in der Schaltstellung D mit einem Tankanschluß T verbunden.

Eine Verstellung der Übersetzungsverhältnisses des Getriebes 12 Richtung "Low" erfolgt bei diesem Ausführungsbeispiel zum Beispiel nur im Betriebszustand D bzw. in der Schaltstellung D. Hierbei wird der Druck im Kolbenraum 24 der ersten Verstellvorrichtung 14 über die Versorgungsleitung 28, die Abzweigleitung 60, das Umschaltventil 58, die Drossel 82, die zweite Steuerleitung 54 und die Hydraulikleitung 56' auf den Druckanschluß D des zusätzlichen Druckbegrenzungsventils 66 geleitet. Der Druck des Kolbenraums 24 der ersten Verstellvorrichtung 14, der an der Drossel 82 ansteht, wird durch die Drossel 82 so reduziert, daß über das Druckbegrenzungsventil 66 das erforderliche Ölvolumen zur Verstellung des Getriebes 12 Richtung "Low" ablaufen kann. Die Größe der Drossel 82 ist dabei in Abhängigkeit der erforderlichen bzw. gewünschten Geschwindigkeit für die Verstellung des Getriebes 12 zu bemessen.

In den Schaltstellungen bzw. Betriebszuständen P, R, N wird der dritte Steuereingang S3 des Ventils 36b über die dritte Steuerleitung 76 und die Leitung 78 mit Druck beaufschlagt, wodurch die Drehzahl, bei der das Ventil 36b schließt, deutlich abgesenkt wird und eine unerwünschte Verstellung des Übersetzungsverhältnisses des Getriebes 12 im Leerlauf des Motors Richtung "Low" verhindert wird. Der durch die Drossel 82 reduzierte Druck des Kolbenraumes 24 der ersten Verstellvorrichtung 14 steht hierbei sowohl am zweiten Steuereingang S2 als auch am dritten Steuereingang S3 des Ventils 36b an. Die resultierenden Druckkräfte wirken sich entgegen. Die Druckkraft, die aus dem am ersten Steuereingang S1 anstehenden Druck resultiert, wirkt ebenfalls der am zweiten Steuereingang S2 anstehenden Druckkraft entgegen. Da über das Druckbegrenzungsventil 66, insbesondere bei niedrigen Drehzahlen des Motors, Öl aus dem Kolbenraum 26 entweichen kann, sind die Druckkräfte so zu bemessen, daß bei einer beginnenden Verstellung des Übersetzungsverhältnisses des Getriebes 12 Richtung "Low" das Ventil 36b in die Regelstellung I gebracht wird, wodurch wieder ein von der ersten Pumpe 42 erzeugter hoher Druck an den Kolbenraum 24 der ersten Verstellvorrichtung 14 geleitet wird. Dadurch wird das Übersetzungsverhältnis des Getriebes 12 wieder Richtung "Overdrive" verstellt.

Wesentlich beim dritten Ausführungsbeispiel ist ferner, daß zusätzliche Mittel vorgesehen sind, die eine Verstellung des Getriebes 12 in Richtung "Low" nur im Betriebszustand Vorwärtsfahrt D ermöglichen. Eine solche Verstellung im Betriebszustand Rückwärtsfahrt R ist jedoch auch möglich. Ist eine Einrichtung vorgesehen, die den Betriebszustand Parken P bzw. die Schaltstellung P des Schaltventils 68 nur bei Stillstand des Fahrzeugs ermöglicht, so kann die Verstellung auch hier erfolgen. Die zusätzlichen Mittel sind im wesentlichen die Leitungen 60, 82, 54, 56, die bei den entsprechenden Betriebszuständen Vorwärtsfahrt D sowie gegebenenfalls Rückwärtsfahrt R und eventuell Parken P mit dem Druckbegrenzungsventil 66 verbunden sind. Eine Verstellung des Übersetzungsverhältnisses des Getriebes 12 Richtung "Low" ist insbesondere im Betriebszustand Neutral N zu verhindern.

Insgesamt kommt es bei den Hydrauliksteuerungen 10, 10a, 10b darauf an, daß die Hydrauliksteuerungen 10, 10a, 10b aus einem Leistungsteil, der in den Ausführungsbeispielen im wesentlichen das Getriebe 12 aufweist und von einer ersten Pumpe 42 gespeist wird, und einem Steuerungsteil, der in den Ausführungsbeispiel im wesentlichen die Drosselstelle 50 und das Ventil 36, 36a, 36b aufweist, wobei noch Verbindungsleitungen vorgesehen sind, besteht. Für den Steuerungsteil ist erfindungsgemäß eine zweite Pumpe 64 vorgesehen, die einen niedrigeren Druckbereich erzeugt als die mindestens erste Pumpe 42.

## Patentansprüche

1. Hydrauliksteuerung (10, 10a, 10b) für ein stufenlos veränderliches Getriebe (12), insbesondere ein Doppelkegelscheiben-Umschlingungsgetriebe, vorzugsweise beim Ausfall der elektrischen Versorgung einer elektrohydraulischen Steuerung des stufenlosen Getriebes (12), bestehend aus einem Leistungsteil, der von mindestens einer ersten Pumpe (42) gespeist wird, die zur Beaufschlagung der Kolbenräume (24, 26) einer ersten und einer zweiten Verstellvorrichtung (14, 16) zur Übersetzungsänderung des Getriebes (12) vorgesehen ist, und bestehend aus einem Steuerungsteil sowie Verbindungsleitungen, wobei wenigstens ein Ventil (36, 36a, 36b) zur Steuerung des Druckes in dem mindestens einen Kolbenraum (24) der ersten Verstellvorrichtung (14) vorhanden ist, das mit einem an einer Drosselstelle (50) erzeugten Druckgefälle steuerbar ist, **dadurch gekennzeichnet, daß** für den Steuerungsteil mindestens eine zweite Pumpe (64) vorgesehen ist, die einen niedrigeren Druckbereich erzeugt als die mindestens erste Pumpe (42), und daß die Drosselstelle (50) der mindestens zweiten Pumpe (64) nachgeschaltet ist.

2. Hydrauliksteuerung (10, 10a, 10b) nach Anspruch 1, **dadurch gekennzeichnet, daß** der Leistungsteil im wesentlichen ein Getriebe (12) und der Steuerungsteil im wesentlichen eine Drosselstelle (50) und ein Ventil (36, 36a, 36b) aufweist.

3. Hydrauliksteuerung (10, 10a, 10b) nach Anspruch 1 oder 2, **dadurch gekennzeichnet, daß** die mindestens erste Pumpe (42) eine Hochdruckpumpe und die mindestens zweite Pumpe (64) eine Niederdruckpumpe ist.

4. Hydrauliksteuerung (10, 10a, 10b) nach einem der Ansprüche 1 bis 3, **dadurch gekennzeichnet, daß** die mindestens erste Pumpe (42) einen Druckbereich von 4 bis 80bar und die mindestens zweite Pumpe einen Druckbereich von 2 bis 7bar erzeugt.

5. Hydrauliksteuerung (10, 10a, 10b) nach einem der Ansprüche 1 bis 4, **dadurch gekennzeichnet, daß** der Drosselstelle (50) ein Druckbegrenzungsventil (66) nachgeschaltet ist.

## Claims

1. Hydraulic control (10, 10a, 10b) for a continuously variable transmission (12), in particular a wrap-around transmission of the double conical disc type, preferably in the event of failure of the electrical supply of an electrohydraulic control of the continuously variable transmission (12), consisting of a power part fed by at least a first pump (42) which is provided for acting upon the piston spaces (24, 26) of a first and of a second adjusting device (14, 16) for changing the ratio of the transmission (12), and consisting of a control part and of connecting lines, there being at least one valve (36, 36a, 36b) for controlling the pressure in the at least one piston space (24) of the first adjusting device (14), the said valve being capable of being controlled by means of a pressure drop generated at a throttle point (50), **characterized in that** at least a second pump (64) is provided for the control part, the said second pump generating a lower pressure range than the at least first pump (42), and **in that** the throttle point (50) is located downstream of the at least second pump (64).

2. Hydraulic control (10, 10a, 10b) according to Claim 1, **characterized in that** the power part has essentially a transmission (12) and the control part has essentially a throttle point (50) and a valve (36, 36a, 36b).

3. Hydraulic control (10, 10a, 10b) according to Claim 1 or 2, **characterized in that** the at least first pump (42) is a high-pressure pump and the at least second pump (64) is a low-pressure pump.

4. Hydraulic control (10, 10a, 10b) according to one of Claims 1 to 3, **characterized in that** the at least first pump (42) generates a pressure range of 4 to 80 bar and the at least second pump generates a pressure range of 2 to 7 bar.

5. Hydraulic control (10, 10a, 10b) according to one of Claims 1 to 4, **characterized in that** a pressure-limiting valve (66) is located downstream of the throttle point (50).

## Revendications

1. Commande hydraulique (10, 10a, 10b) d'une transmission à variation continue (12), notamment pour un variateur mécanique à deux poulie coniques et à élément transmetteur déformable, notamment en cas de défaillance de l'alimentation électrique d'une commande électro-hydraulique de la transmission à variation continue (12), comprenant une partie de puissance alimentée par au moins une première pompe (42) prévue pour alimenter les chambres de pistons (24, 26) d'un premier et d'un second dispositif d'actionnement (14, 16) pour modifier le rapport de la transmission (12), et composée d'une pièce de commande ainsi que de lignes de liaison et d'au moins une vanne (36, 36a, 36b) pour commander la pression dans au moins une chambre de pistons (24) du premier dispositif d'actionnement (14), commandée par la chute de pression créée au niveau d'un point d'étranglement (50),
**caractérisée en ce qu'**
elle comporte au moins une seconde pompe (64) pour la partie de commande, cette pompe générant une plage de pression plus basse qu'au moins la première pompe (42) et le point d'étranglement (50) est en aval au moins de la seconde pompe (64).

2. Commande hydraulique (10, 10a, 10b) selon la revendication 1,
**caractérisée en ce que**
la partie de puissance est constituée principalement par une transmission (12) et la partie de commande essentiellement par un point d'étranglement (50) et une vanne (36, 36a, 36b).

3. Commande hydraulique (10, 10a, 10b) selon la revendication 1 ou 2,
**caractérisée en ce que**
la première pompe (42) est une pompe à haute pression et la seconde pompe (64) est une pompe basse pression.

4. Commande hydraulique (10, 10a, 10b) selon l'une des revendications 1 à 3,
**caractérisée en ce que**
la première pompe (42) crée une plage de pression comprise entre 4 et 80 bars et la seconde pompe crée une plage de pression comprise entre 2 et 7 bars.

5. Commande hydraulique (10, 10a, 10b) selon l'une des revendications 1 à 4,
**caractérisée en ce que**
le point d'étranglement (50) est suivi d'une soupape de limitation de pression (66).
